# EUROPEAN PATENT APPLICATION

(11) **EP 2 974 788 A1**
(43) Date of publication of application: **20.01.2016**
(21) Application number: 13877643.0
(22) Date of filing: 15.03.2013
(51) Int. Cl.: B01F 15/02

(54) **FLUID ADJUSTING DEVICE**

(71) Applicant: Shen, Ruhua, Henan 450042 (CN)
(72) Inventor: WANG, Xiaodong, Zhengzhou Henan 450042 (CN)
(74) Representative: Intès, Didier Gérard André
(86) International application number: PCT/CN2013/072657
(87) International publication number: WO 2014/139135

(57) **Abstract**

A fluid adjusting device (3) comprises a dual-measuring cylinder pump (8). The dual-measuring cylinder pump (8) has a first measuring cylinder (10) and a second measuring cylinder (11) arranged in parallel, and a first piston (12) and a second piston (13) respectively located in the first measuring cylinder (10) and the second measuring cylinder (11). A piston rod (17) of the first piston (12) and a piston rod (18) of the second piston (13) are connected in parallel through one piston rod connector (19), so that the first piston (12) and the second piston (13) can respectively perform synchronous and reciprocating movement in the first measuring cylinder (10) and the second measuring cylinder (11). A color mixer comprising the fluid adjusting device (3) is further related.

## Description

### Field of the Invention

The present invention relates to a fluid adjusting device used for controlling and adjusting the dosage of chemicals (e.g., medicament, beauty products, perfume, color paste, paint and the like), and the fluid adjusting device is particularly suitable for color mixers.

### Background of the Invention

A color mixer is a machine used for selecting and outpouring color paste with basic colors to mix more kinds of coatings with different colors according to user demands. Compared with manual color mixing, the color mixer has the advantages of high efficiency and high accuracy, and can guarantee that the same color mixed at each time is completely the same. Color mixers available on the current market can be approximately divided into two kinds according to different application occasions, one kind is color mixers used for preparing a large number of products for industrial purposes, for example, emulsion paint color mixers used in factories, and the like, and the other kind is color mixers used for producing samples for sampling purposes, for example, color mixers used in emulsion paint color mixing shops or laboratories, etc. The color mixing amount of the first kind of color mixers is generally large while the precision of a small outpouring amount is smaller, since the second kind of color mixers is usually used for carrying out color mixing on a small amount of emulsion paint (e.g., 1-liter, 4-liter loaded emulsion paint buckets), the outpouring amount of color paste is very small sometimes (for example, only 0.077 ml or 0.038 ml or a smaller amount of a certain kind of color paste is required for outpouring), then the precision requirement is high, however, the color mixers used in color mixing shops on the current market also have color mixing requirements of outpouring the color paste in a large dosage. It is well known in the industry that, for one color mixer, if efficient and large-dosage color paste outpouring efficiency can be guaranteed, small-dosage color paste outpouring precision is very difficult to be guaranteed. On the contrary, if the small-dosage color paste outpouring precision is guaranteed, the large-dosage color paste outpouring efficiency is very difficult to be guaranteed. This is a pair of contradictions, which has always plagued the improvement of comprehensive performance of the color mixers and brings certain inconvenience to comprehensive color mixing of users.

The color mixer is generally provided with a plurality of independent color mixing loops, and each loop corresponds to a kind of color paste to be mixed. Each loop is composed of a color paste bucket used for storing quantitative color paste, a pump (e.g., a piston pump, a gear pump, a screw pump and a folding pump and the like) communicated with the color paste bucket and used for sucking a certain amount of color paste from the color paste bucket and injecting the color paste into a mixing container, and a control valve and a pipeline which are associated, etc.

In the color mixer, the outpouring amount of the color paste is generally determined by the stroke of the pump, for example, the outpouring amount of the color paste of the piston pump is determined by the piston stroke of the piston pump, while the outpouring amount of the color paste of the screw pump is determined by a screw rotating angle, etc. But regardless of the type of the pump, the working stroke of the pump corresponds to a certain outpouring amount of the color paste.

For the first kind of color mixers described above, the pumps equipped on the color mixers are generally large-capacity pumps. This is because, when a large amount of color paste needs to be outpoured, the capacity of the pumps is generally expected to be large enough to shorten the time necessary for outpouring the color paste while meeting the requirements of outpouring a large amount of color paste, so as to improve the outpouring efficiency and the product productivity. However, according to various demands of the user, a small amount of color paste and even a trace amount of color paste needs to be outpoured at most occasions as well, and at this time, the large-capacity pumps often fail to meet the requirements of trace precision. This is because, for the large-capacity pumps, the working strokes of the pumps for outpouring the small amount of color paste and even the trace amount of color paste are very small. At this time, it is required that the pumps can distinguish and achieve micro working strokes on mechanical structures and guarantee high precision of color paste amounts outpoured by the working strokes, this is very difficult. In order to compensate the deficiencies of the large-capacity pumps, people will use color mixers provided with small-capacity pumps, namely the second kind of color mixers described above to meet the requirements of trace amount and high precision. With the color mixer provided with the piston pump as an example, when outpouring the same amount of color paste, the piston movement stroke of a small-capacity piston pump is larger than the piston movement stroke of a large-capacity piston pump, and even the former is larger than the latter for several times. Therefore, the problem that when outpouring a trace amount of color paste, the large-capacity pumps cannot guarantee the outpouring precision is solved. However, when being used for achieving large amount outpouring, the small-capacity pumps are complex, time-wasting and low-efficiency. Furthermore, in consideration of cost and size, it is not realistic to provide two kinds of color mixers with different precisions. From another point of view, not only the outpouring strokes of the large-capacity piston pump and the small-capacity piston pump determine the outpouring precision and efficiency of the color paste, the size of an aperture of a color paste outlet nozzle for outpouring the color paste also influences the outpouring efficiency and outpouring precision of the color paste. That is to say, when the aperture of a color paste outpouring opening is large, high-efficiency color paste outpouring is achieved, and when the aperture of the color paste outpouring opening is small, the outpouring precision of the small amount of color paste is liable to achieve, but the high-efficiency color paste outpouring will be obstructed.

US2009/0236367A1 discloses a double-piston assembly for a color mixer, wherein a small piston is driven by an actuator (a piston rod) to move between a retracted position and a discharge position in a large piston, in order to outpour a small amount of color paste. In the structure, when the actuator (piston rod) moves downwards, the large piston moves synchronously, when the large piston moves to the lowest position and cannot move anymore, then the piston rod is further propelled downwards to drive the small piston so as to output a small amount of color paste. Although this double-piston assembly saves a certain space, the structure design is complex and the control steps are troublesome. The small piston can only be actuated after the large piston finishes the stroke thereof, when this structure is designed, the spring force in the small piston must be larger than the impetus when the large piston outpours the color paste, in order to reliably guarantee the outpouring precision, the spring force is generally designed with a very large surplus amount, in this way, the synchronous outpouring movement of the large piston and the actuator (piston rod) can be guaranteed, and the necessary outpouring precision of the large amount of color paste can be guaranteed. The impetus necessary for the large piston for outpouring the color paste is generally large. That is to say, a pre-pressing force on a spring on the small piston must be much larger than the maximum impetus of the large piston to achieve this synchronization, such that the force necessary for the moving small piston for outpouring the color paste is a sum of a force overcoming the spring force and a force overcoming the impetus of the small piston on the color paste. This resultant force is generally very large, resulting in increased power necessary for the actuator of the piston pump, which invisibly increases the manufacturing cost of the mechanism.

EP1908510A2 also discloses another type of color mixer. Two color paste amount control loops are connected with the same color paste bucket and the same outpouring opening to achieve large amount and trace amount outpouring of the color paste. The two control loops are relatively independent and are respectively provided with such components as separate pumps and tee valves and the like. Since being provided with the two control loops with approximately similar components, the color mixer is large in size, complicated in structure and high in cost.

Therefore, the color mixers on the current market still have spaces for improvement.

### Summary of the Invention

To solve the technical problems described above, one purpose of the present invention is to provide a fluid adjusting device. The device includes a dual-measuring cylinder pump, the dual-measuring cylinder pump is provided with a first measuring cylinder and a second measuring cylinder which are arranged in parallel, and a first piston and a second piston which are respectively located in the first measuring cylinder and the second measuring cylinder, wherein the piston rod of the first piston and the piston rod of the second piston are connected in parallel through the same piston rod connector, so that the first piston and the second piston can respectively perform synchronous and reciprocating movement in the first measuring cylinder and the second measuring cylinder, the fluid adjusting device further includes an adjusting mechanism, the adjusting mechanism includes a mechanical converter and an actuator used for actuating the converter, the mechanical converter can be driven by the actuator to achieve a plurality of fluid adjustment states, the converter is provided with a shell and a core located in the shell, the shell includes a first surface, a second surface and a third surface, and a first through hole in fluid communication with the first measuring cylinder and a second through hole in fluid communication with the second measuring cylinder are formed on the first surface; a third through hole used for forming fluid communication between the first measuring cylinder and an external fluid storage tank and a fourth through hole used for forming fluid communication between the second measuring cylinder and the external fluid storage tank are formed on the second surface; and a fifth through hole used for forming fluid communication between the first measuring cylinder and an external fluid receiving container and a sixth through hole used for forming fluid communication between the second measuring cylinder and the external fluid receiving container are formed on the third surface.

Preferably, the diameter of the first measuring cylinder is larger than the diameter of the second measuring cylinder, and the diameter of the first piston rod is larger than the diameter of the second piston rod.

Preferably, the adjusting mechanism has a first fluid adjustment state, in the first fluid adjustment state, the actuator is located at a first actuating position, and under the drive of the actuator, the core of the converter allows the first measuring cylinder to form fluid communication with the fluid storage tank only via the first through hole and the third through hole by means of a pipeline, and allows the second measuring cylinder to form fluid communication with the fluid storage tank only via the second through hole and the fourth through hole by means of a pipeline.

Preferably, the fluid adjusting device further includes a second fluid adjustment state, in the second fluid adjustment state, the actuator is located at a second actuating position, and under the drive of the actuator, the core of the converter allows the first measuring cylinder to form direct fluid communication with the fluid receiving container only via the first through hole and the fifth through hole in the absence of a pipeline, and allows the second measuring cylinder to form fluid communication with the fluid storage tank only via the second through hole and the fourth through hole by means of a pipeline.

Preferably, the fluid adjusting device further includes a third fluid adjustment state, in the third fluid adjustment state, the actuator is located at a third actuating position, and under the drive of the actuator, the core of the converter allows the first measuring cylinder to form direct fluid communication with the fluid receiving container only via the first through hole and the fifth through hole in the absence of a pipeline, and allows the second measuring cylinder to form direct fluid communication with the fluid receiving container only via the second through hole and the sixth through hole in the absence of a pipeline.

Preferably, the fluid adjusting device further includes a fourth fluid adjustment state, in the fourth fluid adjustment state, the actuator is located at a fourth actuating position, and under the drive of the actuator, the core of the converter allows the second measuring cylinder to form direct fluid communication with the fluid receiving container only via the second through hole and the sixth through hole in the absence of a pipeline, and allows the first measuring cylinder to form fluid communication with the fluid storage tank only via the first through hole and the fourth through hole by means of a pipeline.

Preferably, the actuator is a manual change-over lever.

Preferably, the actuator is a motor.

Preferably, the mechanical converter is a column valve core conversion valve.

Another aspect of the present invention relates to a fluid adjusting device. The device includes a dual-measuring cylinder pump, the dual-measuring cylinder pump is provided with a first measuring cylinder and a second measuring cylinder which are arranged in parallel, and a first piston and a second piston which are respectively located in the first measuring cylinder and the second measuring cylinder, wherein the piston rod of the first piston and the piston rod of the second piston are connected in parallel through the same piston rod connector, so that the first piston and the second piston can respectively perform synchronous and reciprocating movement in the first measuring cylinder and the second measuring cylinder, the fluid adjusting device further includes an adjusting mechanism, the adjusting mechanism includes an electric converter and an actuator used for actuating the electric converter, the electric converter can be driven by the actuator to achieve a plurality of fluid adjustment states, the converter is provided with a shell and a core located in the shell, the shell includes a first surface, a second surface and a third surface, and a first through hole in fluid communication with the first measuring cylinder and a second through hole in fluid communication with the second measuring cylinder are formed on the first surface; a third through hole used for forming fluid communication between the first measuring cylinder and an external fluid storage tank and a fourth through hole used for forming fluid communication between the second measuring cylinder and the external fluid storage tank are formed on the second surface; and a fifth through hole used for forming fluid communication between the first measuring cylinder and an external fluid receiving container and a sixth through hole used for forming fluid communication between the second measuring cylinder and the external fluid receiving container are formed on the third surface.

Preferably, the core is provided with a first chip and a second chip, which are rotatable and are coaxially connected with the actuator through a coupler, and the two rotatable chips can be driven by the actuator to rotate to form angles so as to achieve a plurality of fluid adjustment states.

Preferably, the adjusting mechanism has a first fluid adjustment state, in the first fluid adjustment state, the first chip and the second chip are located at a first rotating position, at this time, the first chip allows the first measuring cylinder to form fluid communication with the fluid storage tank only via the first through hole and the third through hole by means of a pipeline, and the second chip allows the second measuring cylinder to form fluid communication with the fluid storage tank only via the second through hole and the fourth through hole by means of a pipeline.

Preferably, the adjusting mechanism has a second fluid adjustment state, in the second fluid adjustment state, the first chip and the second chip are located at a second actuating position, at this time, the first chip allows the first measuring cylinder to form direct fluid communication with the fluid receiving container only via the first through hole and the fifth through hole in the absence of a pipeline, and the second chip allows the second measuring cylinder to form fluid communication with the fluid storage tank only via the second through hole and the fourth through hole by means of a pipeline.

Preferably, the adjusting mechanism has a third fluid adjustment state, in the third fluid adjustment state, the first chip and the second chip are located at a third actuating position, and at this time, the first chip and the second chip respectively block the fluid communication between the first measuring cylinder with the fluid receiving container and between the second measuring cylinder with the fluid receiving container.

Preferably, the adjusting mechanism has a fourth fluid adjustment state, in the fourth fluid adjustment state, the first chip and the second chip are located at a fourth rotating position, at this time, the second chip allows the second measuring cylinder to form direct fluid communication with the fluid receiving container only via the second through hole and the sixth through hole in the absence of a pipeline, and the first chip allows the first measuring cylinder to form fluid communication with the fluid storage tank only via the first through hole and the fourth through hole by means of a pipeline.

Preferably, the third through hole and the fourth through hole are connected with the fluid storage tank through the same pipeline.

Preferably, the diameter of the sixth through hole is smaller than the diameter of the fifth through hole, so that the fluid adjusting device outpours large-flow fluid through the fifth through hole and outpours small-flow or micro-flow fluid through the sixth through hole.

Another aspect of the present invention relates to a color mixer. The color mixer includes at least one fluid storage tank; at least one fluid outpouring opening; and the fluid adjusting device described above, the fluid adjusting device is in selective fluid communication with the corresponding fluid storage tank and the fluid outpouring opening.

By adopting the fluid adjusting device provided by the present invention, a single color mixer can be used for meeting the requirements of high yield and high precision at low cost, so that the volume size is small, and the operation and control of an operator are simple and convenient.

### Brief Description of the Drawings

The present invention is further described and illustrated in a nonrestrictive manner with reference to accompanying drawings, in the accompanying drawings:
Fig. 1 schematically shows a perspective view of a fluid adjusting device according to the first embodiment of the present invention;
Fig. 2 schematically shows an integral assembly diagram of a color mixer provided with the fluid adjusting device according to the first embodiment of the present invention;
Fig. 3 schematically shows a perspective view of a converter of an adjusting mechanism of the fluid adjusting device according to the first embodiment of the present invention;
Fig. 4 schematically shows a perspective view of a local section of a first fluid adjustment state in the adjusting mechanism of the fluid adjusting device according to the first embodiment of the present invention;
Fig. 5 schematically shows a perspective view of a local section of a second fluid adjustment state in the adjusting mechanism of the fluid adjusting device according to the first embodiment of the present invention;
Fig. 6 schematically shows a perspective view of a local section of a third fluid adjustment state in the adjusting mechanism of the fluid adjusting device according to the first embodiment of the present invention;
Fig. 7 schematically shows a perspective view of a local section of a fourth fluid adjustment state in the adjusting mechanism of the fluid adjusting device according to the first embodiment of the present invention;
Fig. 8 schematically shows a perspective view of a local section of a fluid adjusting device according to the second embodiment of the present invention;
Fig. 9 schematically shows an integral assembly diagram of a color mixer provided with the fluid adjusting device according to the second embodiment of the present invention;
Fig. 10 schematically shows a perspective view of an actuator and an associated converter core in an adjusting mechanism of the fluid adjusting device according to the second embodiment of the present invention;
Fig. 11 schematically shows a perspective view of a local section of a first fluid adjustment state in the adjusting mechanism of the fluid adjusting device according to the second embodiment of the present invention;
Fig. 12 schematically shows a perspective view of a local section of a second fluid adjustment state in the adjusting mechanism of the fluid adjusting device according to the second embodiment of the present invention;
Fig. 13 schematically shows a perspective view of a local section of a third fluid adjustment state in the adjusting mechanism of the fluid adjusting device according to the second embodiment of the present invention;
Fig. 14 schematically shows a perspective view of a local section of a fourth fluid adjustment state in the adjusting mechanism of the fluid adjusting device according to the second embodiment of the present invention.

### Detailed Description of the Embodiments

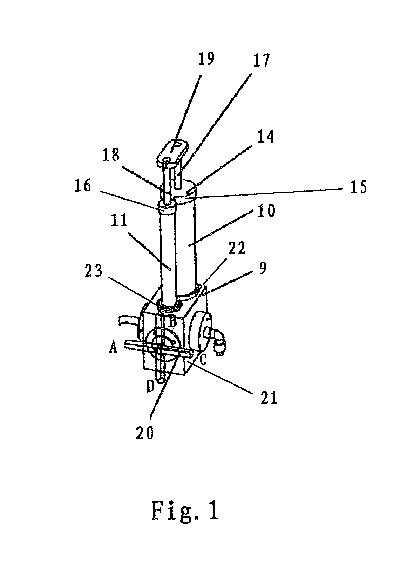

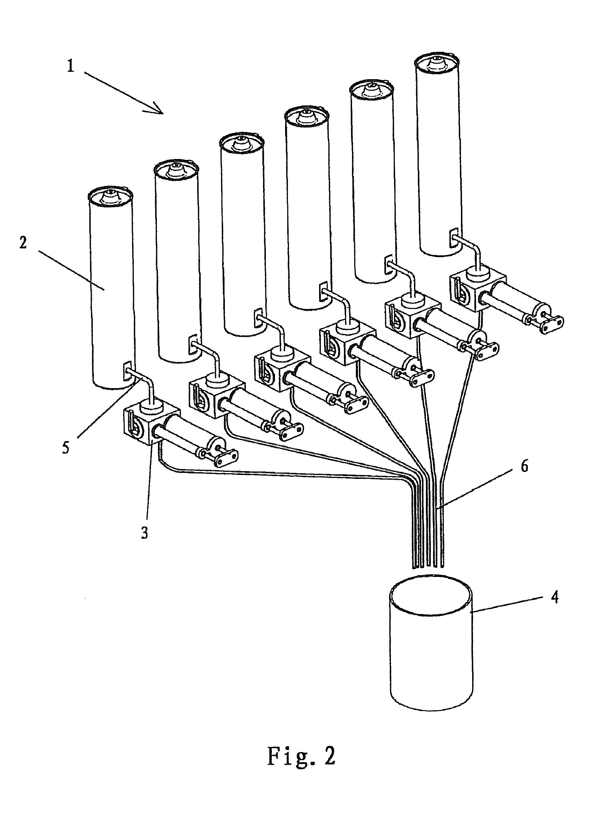

See Fig. 1 at first, the figure schematically shows a fluid adjusting device 3 according to the first embodiment of the present invention. The fluid adjusting device is used in a color mixer 1 as shown in Fig. 2 for mixing colors. It should be noted that, for more clear and exact description, such direction terms as "up", "down", "left", "right" or the like are adopted. But those skilled in the art will clearly understand that the above directions given in combination with the accompanying drawings should not be used as a limitation of the present invention. In addition, the positions of a dual-measuring cylinder pump, an actuator and a fluid inlet and outlet shown in Fig. 1 are not necessarily arranged according to the graphic requirements, but can be modified within a certain range according to the spirit of the present invention.

In the first embodiment as shown in Fig. 1, the fluid adjusting device 3 is composed of a dual-measuring cylinder pump 8 and an adjusting mechanism 9. The dual-measuring cylinder pump 8 is preferably a piston pump and is provided with a first measuring cylinder 10 with a larger diameter and a second measuring cylinder 11 with a smaller diameter. The first measuring cylinder 10 and the second measuring cylinder 11 preferably have cylindrical shapes basically extending along longitudinal axial lines thereof and have basically the same longitudinal length. Preferably, the diameter of the first measuring cylinder 10 is 4-10 times as large as the diameter of the second measuring cylinder 11.

The first measuring cylinder 10 and the second measuring cylinder 11 are positioned in parallel at one of the ends through a measuring cylinder positioning element 14 and are connected to the adjusting mechanism 9 (will be described below in detail) in parallel at the other ends through a first through hole 22 and a second through hole 23 on the adjusting mechanism. The first and second measuring cylinders can be connected with the measuring cylinder positioning element 14 and the adjusting mechanism 9 in known manners in the art. For example, the first and second measuring cylinders can be connected with the measuring cylinder positioning element 14 through interference fit, and at this time, the first and second measuring cylinders are respectively press fitted in a first positioning hole 15 and a second positioning hole 16 of the measuring cylinder positioning element 14. In addition, the first and second measuring cylinders can be connected with the first positioning hole 15 and the second positioning hole 16 of the measuring cylinder positioning element 14 in a threaded connection manner. The first and second measuring cylinders can be connected to the first through hole 22 and the second through hole 23 on the adjusting mechanism 9 in a similar manner.

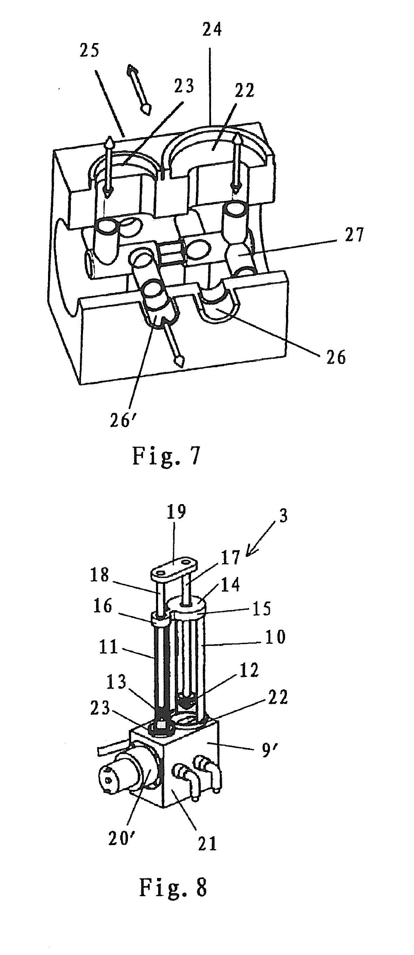

A first piston 12 (as shown in Fig. 8 below) capable of reciprocating is arranged in the first measuring cylinder 10, and a second piston 13 (as shown in Fig. 8 below) capable of reciprocating is arranged in the second measuring cylinder 11. The diameter of the first piston 12 arranged in the first measuring cylinder 10 is correspondingly larger than the diameter of the second piston 13 arranged in the second measuring cylinder 11. The piston rod 17 of the first piston 12 and the piston rod 18 of the second position 13 can have the same diameter or different diameters, but are provided with first ends connected with the corresponding pistons and second ends connected with the same piston rod connector 19. The second ends of the piston rods 17, 18 are respectively connected to the piston rod connector 19 by penetrating through the first positioning hole 15 and the second positioning hole 16 of the measuring cylinder positioning element 14. The piston rod connector 19 connects the piston rods 17, 18 in the two measuring cylinders together, so that the piston rod 17 of the first piston 12 and the piston rod 18 of the second piston 13 can simultaneously and synchronously propel the first piston 12 and the second piston 13 to synchronously reciprocate in the first measuring cylinder 10 and the second measuring cylinder under an acting force applied to the piston rod connector 19. The piston rod 17 (first piston rod 17) of the first piston 12 and the piston rod 18 (second piston rod 18) of the second piston 13 can be integrally formed to a single piece with the piston rod connector 19, and can also be combined with the piston rod connector 19 through a connecting manner known in the art, for example, adhering, welding and the like. Preferably, the piston rod connector 19 is basically arranged along a direction vertical to the cylinder bodies of the measuring cylinders, so as to guarantee that the first piston rod 17 and the second piston rod 18 can be simultaneously located at the same longitudinal depth relatively to the first measuring cylinder 10 and the second measuring cylinder 11 when moving.

Further as shown in Fig. 1, the fluid adjusting device 3 according to the first embodiment of the present invention further includes the adjusting mechanism 9. The adjusting mechanism 9 includes a converter 21 and an actuator 20 used for actuating the converter. For example, the converter 21 is preferably a mechanical conversion valve and is more preferably a column valve core type conversion valve.

Fig. 2 schematically shows a color mixer 1 provided with the fluid adjusting device 3 according to the first embodiment of the present invention. The color mixer further includes a fluid storage tank 2 used for holding color paste and a fluid receiving container 4 located below the fluid storage tank 2 and the fluid adjusting device 3 on the whole. The fluid adjusting device 3 is in fluid communication with the fluid storage tank 2 through an output pipeline 5 and discharges fluid into the fluid receiving container 4.

According to actual demand, the color mixer 1 is generally provided with more than two fluid storage tanks 2 for holding basic color paste with different colors, for simultaneously or respectively outputting the color paste with different colors to the fluid receiving container 4, and as another example, fully mixing with basic paint to form an expected color.

In the color mixer as shown in Fig. 2, under the drive of the actuator 20 of the adjusting mechanism 9, the dual-measuring cylinder pump 8 can form selective fluid communication with the fluid storage tank 2 and the output pipeline 5, so as to achieve a plurality of fluid adjustment states (will be described below).

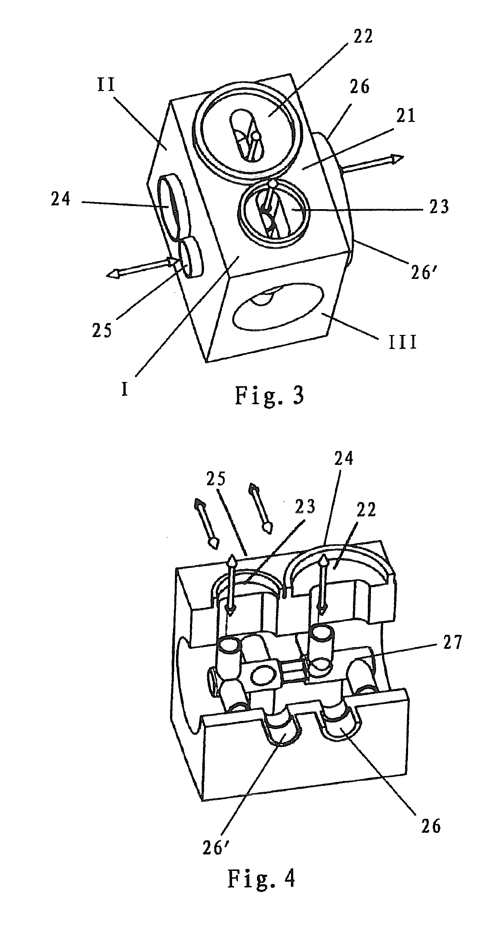

Fig. 3 further schematically shows the converter 21 in the adjusting mechanism 9 of the fluid adjusting device 3 according to the first embodiment of the present invention. As shown in the figure, the converter 21 is preferably provided with an approximately rectangular shell, but the shape of the shell is not limited to a rectangle. In the embodiment, as mentioned above, the converter 21 is preferably a conversion valve and is more preferably a tee conversion valve. The shell of the converter 21 is provided with a first surface I, the surface is provided with the first through hole 22 used for jointing with the first measuring cylinder 10 and the second through hole 23 used for jointing with the second measuring cylinder 11. Preferably, these through holes are arranged in parallel, and for example, are in sealed joint with corresponding measuring cylinders of the dual-measuring cylinder pump 8 in a manner known in the art, so as to prevent fluid leakage. The measuring cylinders of the dual-measuring cylinder pump 8 can be preferably jointed with the first surface I of the converter 21 through pipelines, or are preferably directly jointed with the first surface I.

The shell of the converter 21 is further provided with a second surface II jointed with the fluid storage tank 2 and a third surface III for guiding to the fluid receiving container 4. Optionally, the second surface II and the third surface III are located on two opposite sides of the converter 21. Two through holes, namely a third through hole 24 and a fourth through hole 25 are formed on the second surface II, the first measuring cylinder 10 and the second measuring cylinder 11 of the dual-measuring cylinder pump 8 form selective fluid communication with the fluid storage tank 2 through the two through holes under the control of the converter 21, so as to suck fluid from the fluid storage tank 2 or return fluid into the fluid storage tank 2.

The converter 21 allows fluid in the first measuring cylinder 10 and the second measuring cylinder 11 to be respectively and directly outpoured into the fluid receiving container 4 selectively via a fifth through hole 26 and a sixth through hole 26' on the surface III in the absence of a pipeline. Specifically, the fifth through hole 26 and the sixth through hole 26' are two separate through holes, wherein the fifth through hole 26 is selectively communicated with the first measuring cylinder 10, and the sixth through hole 26' is selectively communicated with the second measuring cylinder 11. The diameters of the two through holes are different according to outpouring precision requirements. In general, the diameter of the through hole 26 communicated with the first measuring cylinder 10 is larger than the diameter of the through hole 26 communicated with the second measuring cylinder 11. By means of the two separate outpouring through holes, different outpouring precisions are further guaranteed. According to one embodiment of the present invention, the fifth through hole can also be a single hole on the surface III, and the first and second measuring cylinders are selectively communicated with the single through hole to outpour fluid.

Four fluid adjustment states achieved by the adjusting mechanism 9 of the fluid adjusting device 3 according to the first embodiment of the present invention will be described below in detail in combination with Fig. 4 to Fig. 7. In the embodiment, the converter 21 can be driven by the actuator 20 (as shown in Fig. 1) to convert the four fluid adjustment states of the adjusting mechanism 9. The actuator 20 as shown in the figure is a manual actuating lever and has four different actuating positions corresponding to the four fluid adjustment states. To better show how the converter 21 achieve the four fluid adjustment states, the converter 21 as shown in Fig. 4 to Fig. 7 is locally sectioned for processing to expose a core 27 located in the shell of the converter 21, and the core is preferably a valve core of a column core type adjusting valve. The valve core 27 is mechanically connected with the actuator 20 and is driven by the actuator 20 to rotate.

At first, as shown in Fig. 4, under the condition that the adjusting mechanism 9 is respectively connected with the fluid storage tank 2, the dual-measuring cylinder pump 8 and the fluid receiving container 4, when the actuator 20 (the actuating lever, not shown in Fig. 4) of the adjusting mechanism 9 is at the first actuating position A (as shown in Fig. 1), the adjusting mechanism 9 is in the first fluid adjustment state. At this time, the core of the converter 21 of the adjusting mechanism 9 allows the first measuring cylinder 10 of the dual-measuring cylinder pump 8 to form fluid communication with the fluid storage tank 2 via the first through hole 22 and the third through hole 24. Similarly and simultaneously, the second measuring cylinder 11 is in fluid communication with the fluid storage tank 2 via the second through hole 23 and the fourth through hole 25. Therefore, when the piston rod connector 19 of the dual-measuring cylinder pump 8 is pulled outwards, the first piston 12 and the second piston 13 are allowed to synchronously move outwards in the first measuring cylinder 10 and the second measuring cylinder 11, so as to simultaneously suck fluid in the fluid storage tank 2 into the first measuring cylinder 10 and the second measuring cylinder 11. It should be noted that, since the internal volumes of the first measuring cylinder 10 and the second measuring cylinder 11 are different, fluid volumes sucked in or pushed out by the same piston working stroke are different. The first measuring cylinder 10 with a larger diameter sucks a larger fluid volume in the same piston working stroke, while the second measuring cylinder 11 with a smaller diameters sucks a smaller fluid volume in the same piston working stroke. In the state, the core 27 of the converter 21 prevents the fluid communication of the first measuring cylinder 10 and the second measuring cylinder 11 with the fifth through hole 26 and the sixth through hole 26'. Therefore, in the state, when the piston rod connector 19 of the dual-measuring cylinder pump 8 is further propelled inwards, the fluid in the two measuring cylinders will return into the fluid storage tank 2. In the first fluid adjustment state, it is particularly beneficial to allow the fluid in the first and second measuring cylinders to flow back into the fluid storage tank 2, and in this way, waste can be reduced to the uttermost so as to save cost and facilitate environmental protection.

When the actuator (the actuating lever) 20 is located at the second actuating position B (as shown in Fig. 1), the adjusting mechanism 9 is in the second fluid adjustment state. At this time, the core 27 of the converter 21 is driven by the actuator (the actuating lever) 20 to further rotate, so as to allow the fluid communication of the first through hole 22 and the fifth through hole 26 and the fluid communication of the second through hole 23 and the fourth through hole 25. At this time, if the piston rod connector 19 of the dual-measuring cylinder pump 8 is propelled, the fluid which has been sucked into the first measuring cylinder 10 in the first fluid adjustment state can be outpoured into the fluid receiving container 4 through the first through hole 22 and the fifth through hole 26 in the absence of a pipeline. However, since the core 27 of the converter 21 still allows the fluid communication of the second through hole 23 and the third through hole 24, but cuts off the fluid communication of the second through hole 23 and the sixth through hole 26', if the second piston 13 in the second measuring cylinder 11 is propelled, the fluid therein will return into the fluid storage tank 2 instead of being outpoured from the adjusting mechanism 9 into the fluid receiving container 4.

It is worthy of being noted that, the second fluid adjustment state is particularly suitable for application occasions needing to output a large amount of fluid, and thus a large amount of fluid can be quickly output at a higher fluid output efficiency. Since the piston rod connector 19 is propelled downwards to drive the fluid in the second measuring cylinder 11 to flow back into the fluid storage tank 2, no fluid is wasted.

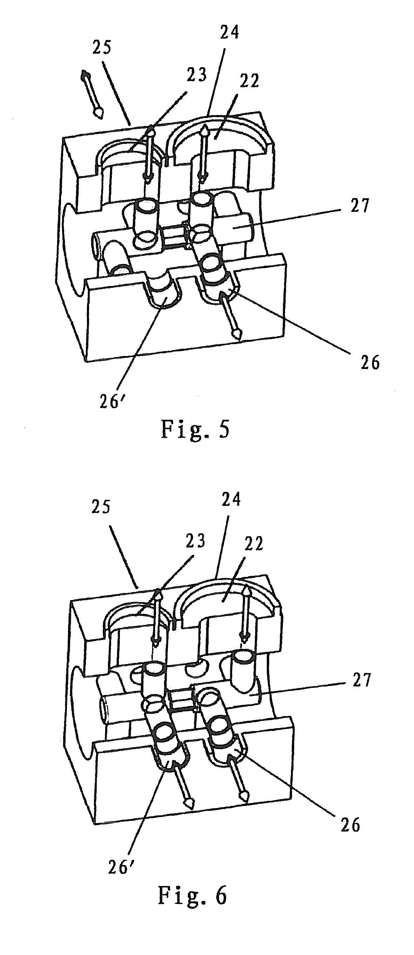

When the actuator (the actuating lever) 20 is at the third actuating position C (as shown in Fig. 1), the adjusting mechanism 9 is in the third fluid adjustment state as shown in Fig. 6. At this time, the core 27 of the converter 21 is driven by the actuator (the actuating lever) 20 to rotate, so as to block the fluid communication of the first through hole 22 and the second through hole 23 with the fluid storage tank 2. That is to say, the first through hole 22 is not in fluid communication with the third through hole 24, and meanwhile the second through hole 23 is not in fluid communcation with the fourth through hole 25, but the first through hole 22 and the second through hole 23 are allowed to respectively form fluid communication with the fifth through hole 26 and the sixth through hole 26'. In the state, if the piston rod connector 19 of the dual-measuring cylinder pump 8 is propelled, the fluid which has been sucked into the first measuring cylinder 10 in the first fluid adjustment state can be injected into the fluid receiving container 4 through the first through hole 22 and the fifth through hole 26 in the absence of a pipeline. Synchronously, if the piston rod connector 19 of the dual-measuring cylinder pump 8 is propelled, the fluid in the second measuring cylinder 11 can be injected into the fluid receiving container 4 through the second through hole 23 and the sixth through hole 26' in the absence of a pipeline.

When the adjusting mechanism 9 is in the fourth fluid adjustment state as shown in Fig. 7, the actuator (the actuating lever) 20 is at the fourth actuating position D. At this time, the core 27 of the converter 21 is rotated in such a manner that the first measuring cylinder 10 of the dual-measuring cylinder pump 8 forms fluid communcation with the fluid storage tank 2 through the first through hole 22 and the third through hole 24, accordingly when the first piston 12 is propelled downwards, the fluid in the first measuring cylinder returns into the fluid storage tank through the first and third through holes. In addition, the second measuring cylinder 11 of the dual-measuring cylinder pump 8 is in fluid communication with the fluid receiving container 4, so that when the second piston 13 is propelled downwards, the fluid in the second measuring cylinder flows out from the second through hole 23 through the sixth through hole 26' and directly enters the fluid receiving container 4.

In the fourth fluid adjustment state, the fluid adjusting device according to the first embodiment of the present invention is very conducive to application occasions needing to output a trace amount of fluid at high precision, so at this time, the second measuring cylinder with a smaller volume is used for outputting the fluid, while the first measuring cylinder with a larger volume is only in fluid communication with the fluid storage tank. Owing to this design, at the same piston working stroke, the fluid volume pushed out from the second measuring cylinder can be very small and even trace, and thus the high precision requirement on the fluid output amount is satisfied. Meanwhile, since the piston rod connector is propelled downwards to drive the fluid in the first measuring cylinder to flow back into the fluid storage tank, no fluid is wasted.

A fluid adjusting device according to the second embodiment of the present invention is schematically shown in Fig. 8, for the purpose of clarity, components which are the same as those in the first embodiment are respectively marked by the same accompanying drawing marks. In the second embodiment as shown in Fig. 8, a fluid adjusting device 3' is composed of a dual-measuring cylinder pump 8 and an adjusting mechanism 9' on the whole. Compared with the fluid adjusting device 3 in the first embodiment, the dual-measuring cylinder pump of the fluid adjusting device 3' in the second embodiment basically has the same structure as the dual-measuring cylinder pump of the fluid adjusting device 3. In Fig. 8, the dual-measuring cylinder pump 8 is locally sectioned to expose the first piston 12 and the second piston 13. Therefore, in order to avoid an overly lengthy description, a detailed description of the dual-measuring cylinder pump 8 in the second embodiment is omitted herein.

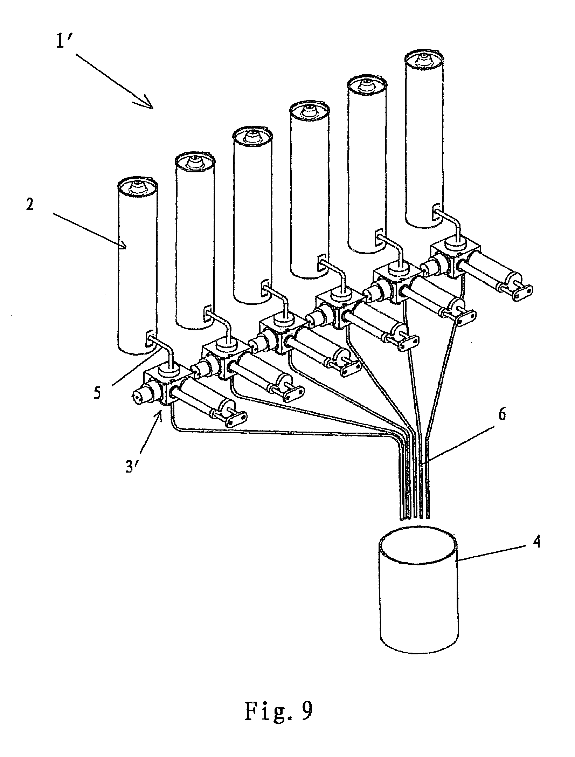

Fig. 9 schematically shows a color mixer 1' provided with the fluid adjusting device 3' according to the second embodiment of the present invention. Except having different fluid adjusting devices, the color mixer 1' is approximately the same as the color mixer 1 in the first embodiment. Therefore, in order to avoid an overly lengthy description, a detailed description of identical components of the color mixer 1' in the second embodiment is omitted herein.

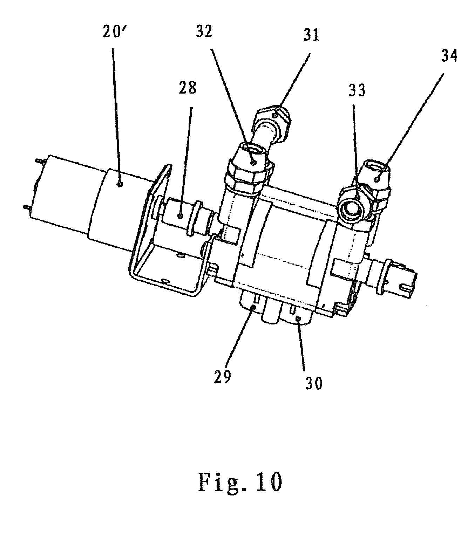

Being different from the manual mechanical adjusting mechanism 9 in the first embodiment, the adjusting mechanism 9' of the fluid adjusting device 3' in the second embodiment is an electric adjusting mechanism and includes an actuator 20' and an electric converter 21'. The actuator 20' is preferably a motor, and the converter 21' is electrically connected with the motor 20' through a coupler 28 (as shown in Fig. 10). Preferably, the electric converter 21' is a ceramic core valve, and the core 27' thereof is provided with two rotatable ceramic core valve blocks 35, 36 coaxially arranged with the coupler 28 for achieving four different fluid adjustment states of the dual-measuring cylinder pump 8 with the fluid storage tank 2 and the fluid receiving container 4. However, those skilled in the art should understand that, the electric converter can also have other forms, and the valve blocks can also be formed by other materials, for example, metal.

Fig. 10 schematically shows the motor 20' and the core 27' of the converter 21' of the conversion mechanism 9' in the second embodiment. In the second embodiment, the shape of the shell of the converter 21' is basically the same as that in the first embodiment and is approximately rectangular, but the shape of the shell is not limited to this shape. The core 27' of the converter 21' is located in the shell and is provided with conduits in fluid communication with the through holes on the corresponding surfaces of the shell. Specifically, the core 27' is provided with a fifth conduit 29 in fluid communication with the first through hole 22 on the first surface I of the shell and a sixth conduit 30 in fluid communication with the second through hole 23 on the first surface I. By means of the fifth duct 29, the first measuring cylinder 10 with the larger volume of the dual-measuring cylinder pump 8 can suck fluid from the fluid storage tank 2 through the first through hole 22 or return the fluid into the fluid storage tank. Similarly, by means of the sixth conduit 30, the second measuring cylinder 11 with the smaller volume of the dual-measuring cylinder pump 8 can suck fluid from the fluid storage tank 2 through the second through hole 23 or return the fluid into the fluid storage tank.

The core 27' further includes a first conduit 31 in selective fluid communication with the third through hole 24 on the second surface II of the shell, a second conduit 32 in selective fluid communication with the fifth through hole 26 on the third surface III, a second conduit 33 in selective fluid communication with the fourth through hole 25 on the second surface II and a fourth conduit 34 in selective fluid communication with the sixth through hole 26' on the third surface III.

The fluid communication state of the first measuring cylinder 10 with the fluid storage tank 2 and the fluid receiving container 4 is adjusted via the first ceramic core valve block 35 of the core 27', and the fluid communication state of the second measuring cylinder 11 with the fluid storage tank 2 and the fluid receiving container 4 is adjusted via the second ceramic core valve block 36 of the core 27'.

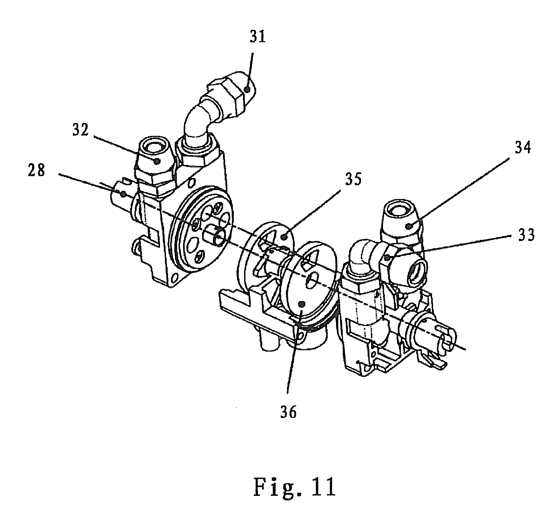

As shown in Fig. 11, the rotating angles of the first and second ceramic core valve blocks of the core 27' are set as 0 degree. At this time, the rotating mechanism 9' is at the first fluid adjustment state as mentioned above. The converter core 27' of the adjusting mechanism 9' allows the first measuring cylinder 10 of the dual-measuring cylinder pump 8 to form fluid communication with the fluid storage tank 2 through the first through hole 22, the first conduit 31 and the third through hole 24. Similarly and synchronously, the second measuring cylinder 11 is in fluid communication with the fluid storage tank 2 through the second through hole 23, the third conduit 33 and the fourth through hole 25. Therefore, when the piston rod connector 19 of the dual-measuring cylinder pump 8 is pulled outwards, the first piston 12 and the second piston 13 are allowed to synchronously move outwards in the first measuring cylinder 10 and the second measuring cylinder 11, so as to simultaneously suck fluid in the fluid storage tank 2 into the first measuring cylinder 10 and the second measuring cylinder 11. It should be noted that, since the internal volumes of the first measuring cylinder 10 and the second measuring cylinder 11 are different, fluid volumes sucked in or pushed out by the same piston working stroke are different. The first measuring cylinder 10 with the larger diameter sucks a larger fluid volume in the same piston working stroke, while the second measuring cylinder 11 with the smaller diameters sucks a smaller fluid volume in the same piston working stroke. In the state, the core 27' of the converter 21' prevents the fluid communication of the first measuring cylinder 10 and the second measuring cylinder 11 with the fifth through hole 26 and the sixth through hole 26'. Therefore, in the state, when the piston rod connector 19 of the dual-measuring cylinder pump 8 is further propelled inwards, fluid in the two measuring cylinders will return into the fluid storage tank 2. In the first fluid adjustment state, it is particularly beneficial to allow the fluid in the first and second measuring cylinders to flow back into the fluid storage tank 2, and in this way, waste can be reduced to the uttermost so as to save cost and facilitate environmental protection.

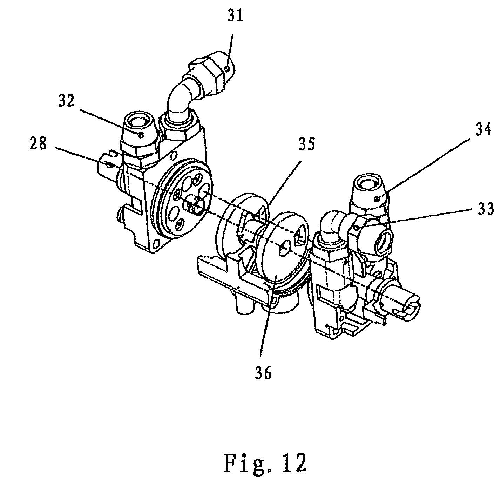

As shown in Fig. 12, when the motor 20' drives the coupler 28 to drive the first ceramic core valve block 35 and the second ceramic core valve block 36 to simultaneously rotate for 90 degrees, the adjusting mechanism 9' is at the second fluid adjustment state. At this time, the core 27' of the converter 21' allows the fluid communication of the first through hole 22 with the fifth through hole 26 through the second conduit 32 and the fluid communication of the second through hole 23 with the fourth through hole 25 through the third conduit 33. At this time, if the piston rod connector 19 of the dual-measuring cylinder pump 8 is propelled, the fluid which has been sucked into the first measuring cylinder 10 in the first fluid adjustment state can be directly outpoured into the fluid receiving container 4 through the first through hole 22, the second conduit 32 and the fifth through hole 26. However, since the core 27' of the converter 21' still allows the fluid communication of the second through hole 23 and the third through hole 24, but cuts off the fluid communication of the second through hole 23 and the sixth through hole 26', if the second piston 13 in the second measuring cylinder 11 is propelled, the fluid therein will return into the fluid storage tank 2 instead of being outpoured from the adjusting mechanism 9' into the fluid receiving container 4.

It is worthy of being noted that, the second fluid adjustment state is particularly suitable for application occasions needing to output a large amount of fluid, and thus a large amount of fluid can be quickly output at a higher fluid output efficiency. Since the piston rod connector 19 is propelled downwards to drive the fluid in the second measuring cylinder 11 to flow back into the fluid storage tank 2, no fluid is wasted.

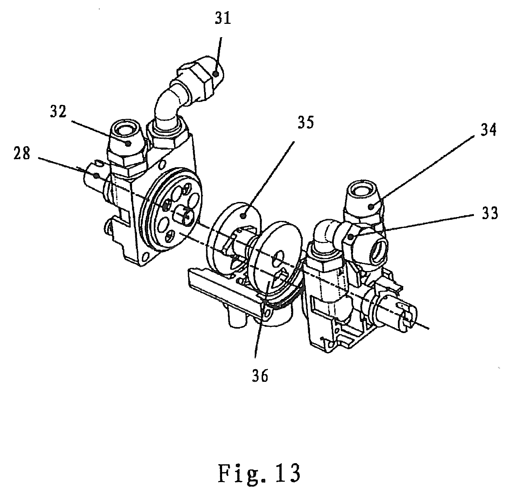

As shown in Fig. 13, when the motor 20' drives the coupler 28 to drive the first ceramic core valve block 35 and the second ceramic core valve block 36 to rotate for 180 degrees, the adjusting mechanism 9' is at the third fluid adjustment state. At this time, the first and second valve blocks of the core 27' of the converter 21' are driven by the motor 20' to simultaneously rotate, in order to block the fluid communication of the first through hole 22 and the second through hole 23 with the fluid storage tank 2. At the same time, the fluid communcation of the first through hole 22 and the second through hole 23 with the fifth through hole 26 and the sixth through hole 26' are respectively blocked.

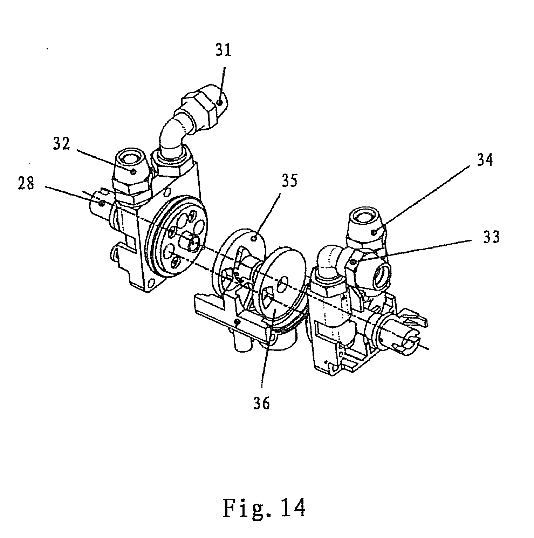

When the adjusting mechanism 9' is located at the fourth fluid adjustment state as shown in Fig. 14, the motor 20' drives the coupler 28 to drive the first and second valve blocks to rotate for 270 degrees. At this time, the core 27' of the converter 21' is rotated in such a manner that the first measuring cylinder 10 of the dual-measuring cylinder pump 8 forms fluid communication with the fluid storage tank 2 through the first through hole 22, the first conduit 31 and the third through hole 24, so when the first piston 12 is propelled downwards, the fluid in the first measuring cylinder returns into the fluid storage tank through the first through hole, the first conduit and the third through hole. In addition, the second measuring cylinder 11 of the dual-measuring cylinder pump 8 is in fluid communication with the fluid receiving container 4 through the fourth conduit 34 and the fifth through hole 26, so that when the second piston 13 is propelled downwards, the fluid in the second measuring cylinder flows out from the second through hole 23 through the fourth conduit 34 and the sixth through hole 26' and directly enters the fluid receiving container 4.

In the fourth fluid adjustment state, the fluid adjusting device according to the first embodiment of the present invention is very conducive to application occasions needing to output a trace amount of fluid at high precision, so at this time, the second measuring cylinder with a smaller volume is used for outputting the fluid, while the first measuring cylinder with a larger volume is only in fluid communication with the fluid storage tank. Owing to this design, at the same piston working stroke, the fluid volume pushed out from the second measuring cylinder can be very small and even trace, and thus the high precision requirement on the fluid output amount is satisfied. Meanwhile, since the piston rod connector is propelled downwards to drive the fluid in the first measuring cylinder to flow back into the fluid storage tank, no fluid is wasted.

However, it should also be further noted that, although the motor is used in the embodiment, the converter 31 in the first embodiment can also be driven by the motor, and at this time, the core 27 of the converter 21 is driven by the motor to rotate to achieve the four different actuating positions corresponding to the four fluid adjustment states.

The fluid adjusting device according to the present invention outputs a large amount of fluid at high efficiency and outputs a trace amount of fluid at high precision. In the fluid adjusting device according to the present invention, the dual-measuring cylinder pump is arranged to achieve independent fluid flow adjustment to further improve the adjustment and output efficiency of the fluid. In addition, by adopting the fluid adjusting device according to the present invention, components are simplified on the basis of achieving the independent fluid flow adjustment, so that the cost is reduced.

Although the present invention has been illustrated in combination with the structures disclosed herein, no limitation is constructed on the detail. Moreover, the present invention attempts to cover all kinds of modifications and variations within the range of an improved purpose or within the range of appended claims.

## Claims

1. A fluid adjusting device, comprising a dual-measuring cylinder pump, wherein the dual-measuring cylinder pump is provided with a first measuring cylinder and a second measuring cylinder which are arranged in parallel, and a first piston and a second piston which are respectively located in the first measuring cylinder and the second measuring cylinder, wherein the piston rod of the first piston and the piston rod of the second piston are connected in parallel through the same piston rod connector, so that the first piston and the second piston can respectively perform synchronous and reciprocating movement in the first measuring cylinder and the second measuring cylinder, the fluid adjusting device further comprises an adjusting mechanism, the adjusting mechanism comprises a mechanical converter and an actuator used for actuating the converter, the mechanical converter can be driven by the actuator to achieve a plurality of fluid adjustment states, the converter is provided with a shell and a core located in the shell, the shell comprises a first surface, a second surface and a third surface, and a first through hole in fluid communication with the first measuring cylinder and a second through hole in fluid communication with the second measuring cylinder are formed on the first surface; a third through hole used for forming fluid communication between the first measuring cylinder and an external fluid storage tank and a fourth through hole used for forming fluid communication between the second measuring cylinder and the external fluid storage tank are formed on the second surface; a fifth through hole used for forming fluid communication between the first measuring cylinder and an external fluid receiving container and a sixth through hole used for forming fluid communication between the second measuring cylinder and the external fluid receiving container are formed on the third surface.

2. The fluid adjusting device of claim 1, wherein the diameter of the first measuring cylinder is larger than that of the second measuring cylinder, and the diameter of the first piston rod is larger than that of the second piston rod.

3. The fluid adjusting device of claim 1 or 2, wherein the adjusting mechanism has a first fluid adjustment state, in the first fluid adjustment state, the actuator is located at a first actuating position, and under the drive of the actuator, the core of the converter allows the first measuring cylinder to form fluid communication with the fluid storage tank only via the first through hole and the third through hole by means of a pipeline, and allows the second measuring cylinder to form fluid communication with the fluid storage tank only via the second through hole and the fourth through hole by means of a pipeline.

4. The fluid adjusting device of claim 3, wherein the fluid adjusting device further comprises a second fluid adjustment state, in the second fluid adjustment state, the actuator is located at a second actuating position, and under the drive of the actuator, the core of the converter allows the first measuring cylinder to form direct fluid communication with the fluid receiving container only via the first through hole and the fifth through hole in the absence of a pipeline, and allows the second measuring cylinder to form fluid communication with the fluid storage tank only via the second through hole and the fourth through hole by means of a pipeline.

5. The fluid adjusting device of claim 4, wherein the fluid adjusting device further comprises a third fluid adjustment state, in the third fluid adjustment state, the actuator is located at a third actuating position, and under the drive of the actuator, the core of the converter allows the first measuring cylinder to form direct fluid communication with the fluid receiving container only via the first through hole and the fifth through hole in the absence of a pipeline, and allows the second measuring cylinder to form direct fluid communication with the fluid receiving container only via the second through hole and the sixth through hole in the absence of a pipeline.

6. The fluid adjusting device of claim 5, wherein the fluid adjusting device further comprises a fourth fluid adjustment state, in the fourth fluid adjustment state, the actuator is located at a fourth actuating position, and under the drive of the actuator, the core of the converter allows the second measuring cylinder to form direct fluid communication with the fluid receiving container only via the second through hole and the sixth through hole in the absence of a pipeline, and allows the first measuring cylinder to form fluid communication with the fluid storage tank only via the first through hole and the fourth through hole by means of a pipeline.

7. The fluid adjusting device of claim 1 or 2, wherein the actuator is a manual change-over lever.

8. The fluid adjusting device of claim 1 or 2, wherein the actuator is a motor.

9. The fluid adjusting device of claim 1 or 2, wherein the mechanical converter is a column valve core conversion valve.

10. The fluid adjusting device of claim 1 or 2, wherein the diameter of the sixth through hole is smaller than that of the fifth through hole, so that the fluid adjusting device outpours large-flow fluid through the fifth through hole and outpours small-flow or micro-flow fluid through the sixth through hole.

11. A fluid adjusting device, comprising a dual-measuring cylinder pump, wherein the dual-measuring cylinder pump is provided with a first measuring cylinder and a second measuring cylinder which are arranged in parallel, and a first piston and a second piston which are respectively located in the first measuring cylinder and the second measuring cylinder, wherein the piston rod of the first piston and the piston rod of the second piston are connected in parallel through the same piston rod connector, so that the first piston and the second piston can respectively perform synchronous and reciprocating movement in the first measuring cylinder and the second measuring cylinder, the fluid adjusting device further comprises an adjusting mechanism, the adjusting mechanism comprises an electric converter and an actuator used for actuating the electric converter, the electric converter can be driven by the actuator to achieve a plurality of fluid adjustment states, the converter is provided with a shell and a core located in the shell, the shell comprises a first surface, a second surface and a third surface, and a first through hole in fluid communication with the first measuring cylinder and a second through hole in fluid communication with the second measuring cylinder are formed on the first surface; a third through hole used for forming fluid communication between the first measuring cylinder and an external fluid storage tank and a fourth through hole used for forming fluid communication between the second measuring cylinder and the external fluid storage tank are formed on the second surface; a fifth through hole used for forming fluid communication between the first measuring cylinder and an external fluid receiving container and a sixth through hole used for forming fluid communication between the second measuring cylinder and the external fluid receiving container are formed on the third surface.

12. The fluid adjusting device of claim 11, wherein the core is provided with a first chip and a second chip, which are rotatable and are coaxially connected with the actuator through a coupler, and the two rotatable chips can be driven by the actuator to rotate to form angles so as to achieve a plurality of fluid adjustment states.

13. The fluid adjusting device of claim 11 or 12, wherein the adjusting mechanism has a first fluid adjustment state, in the first fluid adjustment state, the first chip and the second chip are both located at a first rotating position, at this time, the first chip allows the first measuring cylinder to form fluid communication with the fluid storage tank only via the first through hole and the third through hole by means of a pipeline, and the second chip allows the second measuring cylinder to form fluid communication with the fluid storage tank only via the second through hole and the fourth through hole by means of a pipeline.

14. The fluid adjusting device of claim 13, wherein the adjusting mechanism has a second fluid adjustment state, in the second fluid adjustment state, the first chip and the second chip are located at a second rotating position, at this time, the first chip allows the first measuring cylinder to form direct fluid communication with the fluid receiving container only via the first through hole and the fifth through hole in the absence of a pipeline, and the second chip allows the second measuring cylinder to form fluid communication with the fluid storage tank only via the second through hole and the fourth through hole by means of a pipeline.

15. The fluid adjusting device of claim 14, wherein the adjusting mechanism has a third fluid adjustment state, in the third fluid adjustment state, the first chip and the second chip are located at a third rotating position, and at this time, the first chip and the second chip respectively block the fluid communication of the first measuring cylinder and the second measuring cylinder with the fluid receiving container and the fluid receiving container.

16. The fluid adjusting device of claim 15, wherein the adjusting mechanism has a fourth fluid adjustment state, in the fourth fluid adjustment state, the first chip and the second chip are located at a fourth rotating position, at this time, the second chip allows the second measuring cylinder to form direct fluid communication with the fluid receiving container only via the second through hole and the sixth through hole in the absence of a pipeline, and the first chip allows the first measuring cylinder to form fluid communication with the fluid storage tank only via the first through hole and the fourth through hole by means of a pipeline.

17. The fluid adjusting device of claim 11 or 12, wherein the actuator is a motor.

18. The fluid adjusting device of claim 11 or 12, wherein the third through hole and the fourth through hole are connected with the fluid storage tank through the same pipeline.

19. The fluid adjusting device of claim 11 or 12, wherein the diameter of the sixth through hole is smaller than the diameter of the fifth through hole, so that the fluid adjusting device outpours large-flow fluid through the fifth through hole and outpours small-flow or micro-flow fluid through the sixth through hole.

20. A color mixer, comprising:
at least one fluid storage tank;
at least one fluid outpouring opening; and
at least one fluid adjusting device of any of claims 1-19, wherein the fluid adjusting device is in selective fluid communication with the corresponding fluid storage tank and the fluid outpouring opening.
